# EUROPEAN PATENT SPECIFICATION

(11) **EP 1 235 382 B1**
(45) Date of publication and mention of the grant of the patent: **05.12.2007**
(21) Application number: 01305479.6
(22) Date of filing: 25.06.2001
(51) Int. Cl.: H04L 12/14, G06Q 10/00, H04L 29/06

(54) **Communication method and system**
Kommunikationsverfahren und -vorrichtung
Procédé et appareil de communication

(30) Priority: 22.02.2001 JP 2001045935
(43) Date of publication of application: 28.08.2002
(73) Proprietor: FUJITSU LIMITED, Kawasaki-shi, Kanagawa 211-8588 (JP)
(72) Inventor: Fujisawa, Naoyuki, Nakahara-ku, Kawasaki-shi, Kanagawa 211-8588 (JP); Sasaki, Toshikatsu, Nakahara-ku, Kawasaki-shi, Kanagawa 211-8588 (JP)
(74) Representative: Fenlon, Christine Lesley

(56) References cited:
- US-A- 5 508 817

## Description

This invention relates to a communication method and system.

Postal direct mail and direct mail in e-mail have been used as incorporated advertisements. Postal direct mail, however, is costly to send, and it is difficult to find a reaction from receivers in many cases. Direct mail in e-mail comparatively costs low to send, it nevertheless has a fault that receivers are apt to discard it.

Because of the recent development and diffusion of cellular phones, it is natural to think that direct mail toward cellular phones is to be enormously demanded. However, the problem is that users of cellular phones will have to owe the due of such direct mail. Therefore, that is not appropriate at all, because sending a great deal of direct mail toward cellular phones may force users to owe those large dues.

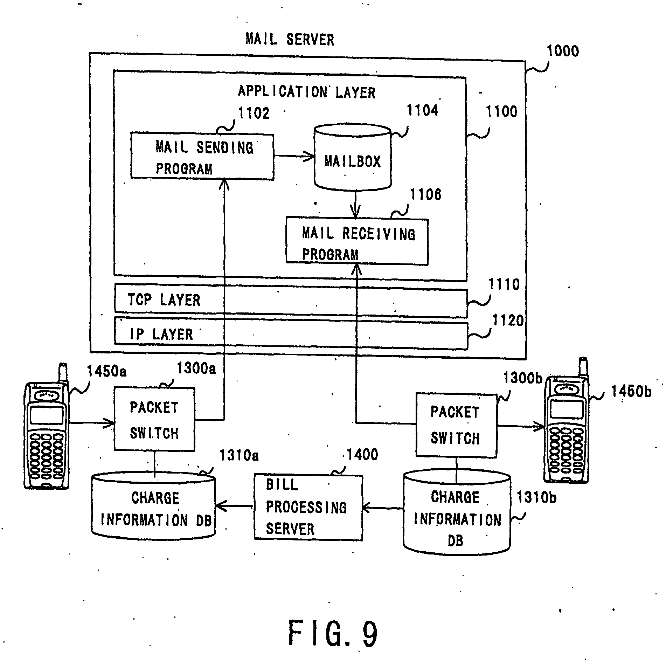

Communication fees to be paid by users may be determined by the number of packets that is requested by user's cellular phone multiplied by a packet unit price, for example. As shown in Fig. 9 of the accompanying drawings for example, in the case of e-mail, the number of packets of the e-mail, which a cellular phone 1450a sends, is counted by a packet switch 1300a. The user is charged in accordance with a calling DTE (Data Terminal Equipment) address of the cellular phone 1450a. The e-mail is output to a mail sending program 1102 in an application layer 1100 of a mail server 1000. The mail sending program 1102 posts the e-mail the destination mailbox 1104. When a cellular phone 1450b of a destination user sends a request packet of receiving e-mail, the request packet of receiving e-mail is sent to a mail receiving program 1106 in the application layer 1100 through a packet switch 1300b. The mail receiving program 1106 reads out the e-mail addressed to users from the mailbox 1104, and sends the e-mail packet data to the cellular phone 1450b through the packet switch 1300b. The packet switch 1300b conducts a charge of the request packet of receiving e-mail and the e-mail packet data to the calling DTE address of the cellular phone 1450b. The charge information generated by the packet switch 1300a and 1300b is stored into a charge information DB 1310a and 1310b. And a bill processing server 1400 performs such as generating a bill, by using the charge information stored in the charge information DB 1310a and 1310b.

The charge information of the packet switch 1300a and 1300b are collected from the information on a packet level in a network layer 1120 that is IP layer. However, when an e-mail or something stored once in the mailbox 1104 is received, information to distinguish whether the mail can be received without any charge or not can be only got in the application layer 1100 or higher. And layers higher than the IP layer 1120 in TCP/IP don't inherit information of the packet level such as the calling address. Therefore, higher-ranking layers than the IP layer 1120 in the TCP/IP protocol, which mean a TCP layer 1110 and the application layer 1100, can not understand information associated with the packet level charging. As a result, a communication fee of a predetermined mail can never be transferred to the sender in the current circumstances.

US 5508817 discloses a method for charging a communication fee, comprising the steps of registering, into a transmitting information storage device, information regarding destination users, a sender, and a particular packet data to be sent; and when a terminal of said destination user registered in said transmitting information storage device performs a processing to receive packet data, charging said destination user for said packet data.

As mentioned above, however, previously it has not been possible not to charge the user for a receiving fee of direct mail in circumstances in which the packet charging is performed.

Accordingly, it is desirable to provide technology in circumstances in which the packet charging is performed to properly charge the receiving fee for a particular packet data to a sender of the particular packet data.

According to a first aspect of the present invention there is provided a method for charging a communication fee, comprising the steps of: registering, into a transmitting information storage device, information including first identification information of destination users, sender identification information, and information regarding particular packet data to be sent; and when a terminal of said destination user registered in said transmitting information storage device performs a processing to receive packet data, charging said destination user for said packet data; wherein said charging step is carried out without distinguishing between said packet data that includes said particular packet data and said packet data that does not include said particular packet data; and transferring a communication fee, caused by said particular packet data included in said packet data during a predetermined period and charged to said destination users, to said sender whose identification information is registered in said transmitting information storage device, by using receiving status data for said particular packet data to be received by said terminals of said destination users registered in said transmitting information storage device; wherein said receiving status data specifies destination users who received said particular packet data and are identified by said first identification information, characterised in that said charging is ase on second identification information of said terminal of said destination user, and said first identification information is different from said second identification information, and a number of packets of said particular packet data is calculated from said information regarding said particular packet data stored in said transmitting information storage device, and an amount of the communication fee to be transferred is calculated by using a number of destination users specified by said receiving status data, and said number of packets of said particular packet data.

For example, the sender, who is an advertiser, registers information regarding destination users and particular packet data to be sent, such as direct mail or other data including programs, and a carrier, which provides an advertisement agent service, for example, transmits the particular packet data to the destination users. A terminal of the destination user receives packet data including the particular packet data from a mailbox, for example, as usual. At that time, the carrier charges the destination user at one point as usual. After that, if it is confirmed, for example, that the terminal of the destination user has performed a processing to receive the particular packet data, a fee charged to the destination user for the particular packet data is transferred to the sender.

Thus, in an embodiment of the present invention, the packet switch performs a processing same as the normal, and does not make a distinction between a charged packet and non-charged packet for each sending or receiving of packet data. Then, a communication fee caused by the particular packet data during the whole packet communication is transferred based on the fact that the destination user has received the particular packet data. With this configuration, a receiving fee for the particular packet data including advertisement can be properly charged to the advertiser as part of the advertisement fee. Therefore, the destination user can freely receive the particular packet data without worrying about the communication fee. In addition, the advertiser can send to cellular phones, for example, direct mail without making the destination user pay the fee, and can expect a new advertisement effect. Furthermore, it can increase a communication volume of packet data such as advertisement, and also can increase a profit of the carrier, which also provides the advertisement agent service.

According to a second aspect of the present invention there is provided a system for charging a communication fee, comprising: means for registering into a transmitting information storage device information including first identification information of destination users, sender identification information, and information regarding particular packet data to be sent; and means for charging said destination user for said packet data when a terminal of said destination user registered in said transmitting information storage device performs a processing to receive packet data ; wherein charging is carried out without distinguishing between said packet data that includes said particular packet data and said packet data that does not include said particular packet data; and means for transferring a communication fee, caused by said particular packet data included in said packet data during a predetermined period and charged to said destination users for said particular packet data, to said sender whose identification information is registered in said transmitting information storage device, by using receiving status data for said particular packet data to be received by said terminals of said destination users registered in said transmitting information storage device; wherein said receiving status data specifies destination users who received said particular packet data and are identified by said first identification information, characterised in that said charging means are operable to charge said destination user for said packet data based on second identification information of said terminal of said destination user, and said first identification information is different from said second identification information and said charging means are operable to calculate a number of packets of said particular packet data from said information regarding said particular packet data stored in said transmitting information storage device and to calculate an amount of communication fee to be transferred by using a number of destination users specified by said receiving status data, and said number of packets of said particular packet data.

A method embodying the present invention can be performed in a combination of a program and a computer hardware, which is a system for transferring a communication fee. In this case, the program is stored on a storage medium, such as a floppy disk, a CD-ROM or a magneto-optical disk, or in a storage device, such as a semiconductor memory or a hard disk. The intermediate processing results are temporarily stored in the memory. In addition, the program may be distributed via network such as the Internet.

Reference will now be made, by way of example, to the accompanying drawings, in which:
Fig. 1 is a diagram showing the outline of the system in an embodiment of the present invention;
Fig. 2 is a diagram showing a processing flow in the embodiment of the present invention;
Fig. 3 is a diagram showing an example of a mailing request for advertising;
Fig. 4 is a diagram showing a processing flow of a charge transfer processing for an advertiser;
Fig. 5 is a diagram showing an example of detailed statements for the advertiser;
Fig. 6 is a diagram showing a processing flow of a charge transfer processing for a destination user;
Fig. 7 is a diagram showing an example of detailed statements for the destination user;
Fig. 8 is a diagram showing a processing flow of another embodiment of the present invention;
Fig. 9 (described above) is a diagram showing a previously-proposed example of the packet charge.

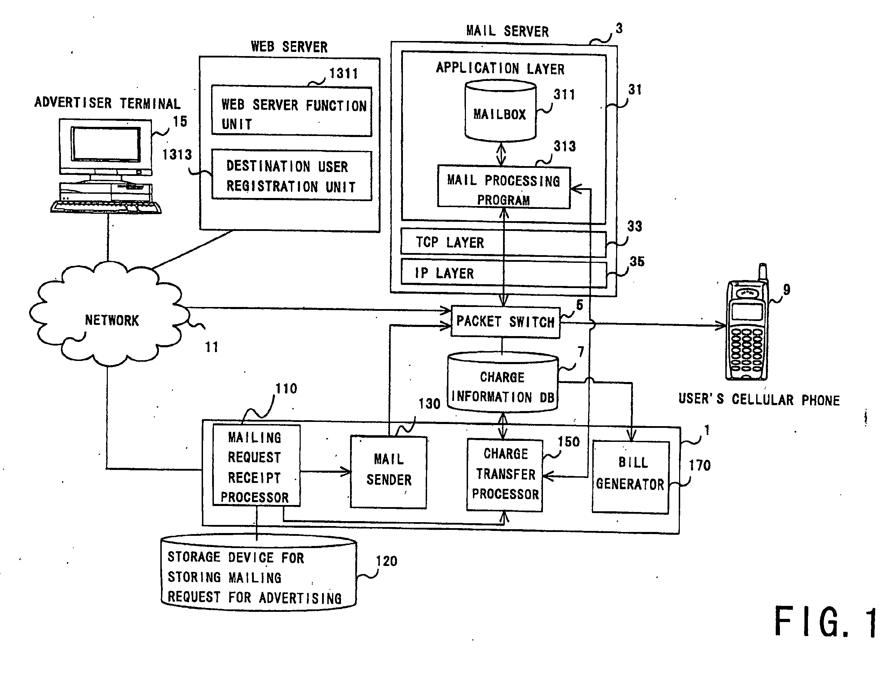

Fig.1 shows a system outline in an embodiment of the present invention. One or a plurality of users' cellular phones 9 send or receive packet data such as e-mail via a packet switch 5. This packet switch 5 conducts a charging processing to the calling DTE address in the network layer, which is an IP layer 35, same as the background art, and stores a charge result in a charge information DB 7. A mail server 3 conducts communication with the user's cellular phone 9 through the packet switch 5. Then, the mail server 3 includes in an application layer 31 which is located on the high-ranking layer of the IP layer 35 and TCP layer 33; a mailbox 311 and a mail processing program 313 for performing a processing to store an received e-mail into a mailbox 311, a processing to send an advertising mail addressed to the user in response to an e-mail receiving request from the user's cellular phone 9, and a processing to record transmission status data of advertising mail. The transmission status data of advertising mail includes information whether or not a receiving processing of a particular e-mail such as an advertising mail was conducted, or whether the e-mail was automatically deleted from the mailbox 311.

An advertising mail agent server 1 includes a mail receipt processor 110, which receives a mailing request for advertising for example, a storage device 120 for storing the mailing request for advertising, which stores information of the mailing request for advertising, a mail sender 130, which sends a mail for the mailing request to the mail server 3 through the packet switch 5, a charge transfer processor 150, which performs charge transfer processing using a content of the mailing request, a content of the charge information DB 7 and the transmission status data of advertising mail from the mail processing program 313, and a bill generator 170 which generates a bill.

There are some methods for an advertiser of inputting data for the mailing request to the mailing request receipt processor 110 in the advertising mail agent server 1. For example, an off-line method of inputting data of the mailing request by a person who reads a filled application form, for example, or a method of sending from an advertiser terminal 15, which is a personal computer, for example, through a network 11, which is the Internet, for example.

The network 11 is connected to servers to provide various information, which are a plurality of web servers 13, for example. The web server 13 sends data through the network 11 and the packet switch 5 in response to a request from the user's cellular phone 9. The web server 13 includes a web server function unit 1311, which realizes the web server function, and a destination user registration unit 1313, which acquires information regarding destination users from the users' cellular phones 9, and transmits the information regarding destination users to be registered, to the mailing request receipt processor 110. The users of the cellular phone 9 may input their identifications into the destination user registration unit 1313 using a web page of an input form to get useful information which may includes programs. The destination user registration unit 1313 may automatically get users' identifications from the users' cellular phones 9 etc.

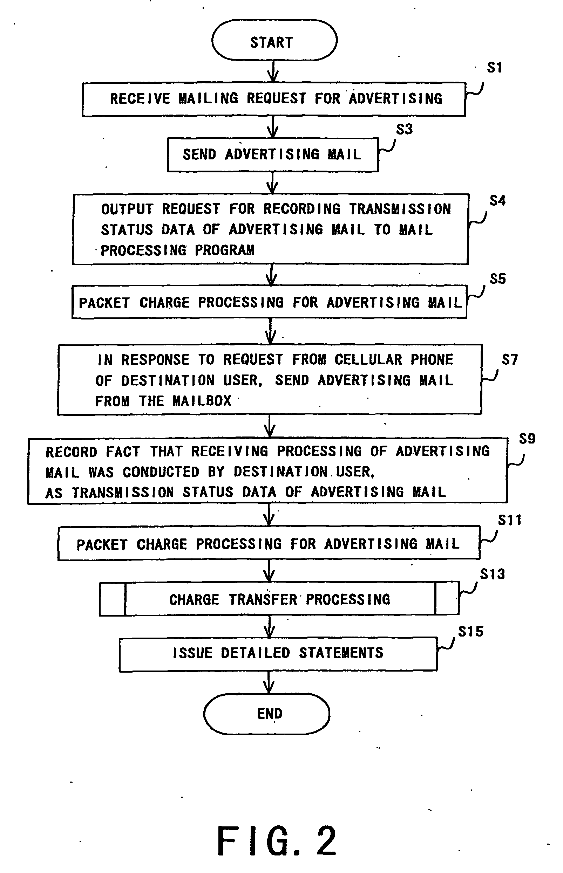

Next, a processing flow of a system shown in Fig. 1 will be explained using Fig. 2 to Fig. 6. The mailing request receipt processor 110 in the advertising mail agent server 1 receives the mailing request for advertising through the network 11 from the advertiser terminal 15 (Fig. 2: step S1). The mailing request receipt processor 110 stores a received mailing request for advertising in the storage device 120 for storing the mailing request for advertising. For example, following configuration will be also adopted; the advertising mail agent server 1 has a function of web server, and sends display information for an input form regarding the sender, the destination users and the contents of the advertisement, which includes HTML (Hyper Text Markup Language) file and/or image files if designated, an advertiser terminal 15 receives the display information and displays it by the web browser, the advertiser fills necessary items in a web browser in the advertiser terminal 5, and sends the input item to the advertising mail agent server 1. In addition, following configuration will be also adopted; the advertiser fills an application form with the mailing request for advertising, for example, submits the form to the advertising mail agent, which is a carrier in this case, and the advertising mail agency inputs the contents of the form to the advertising mail agent server 1.

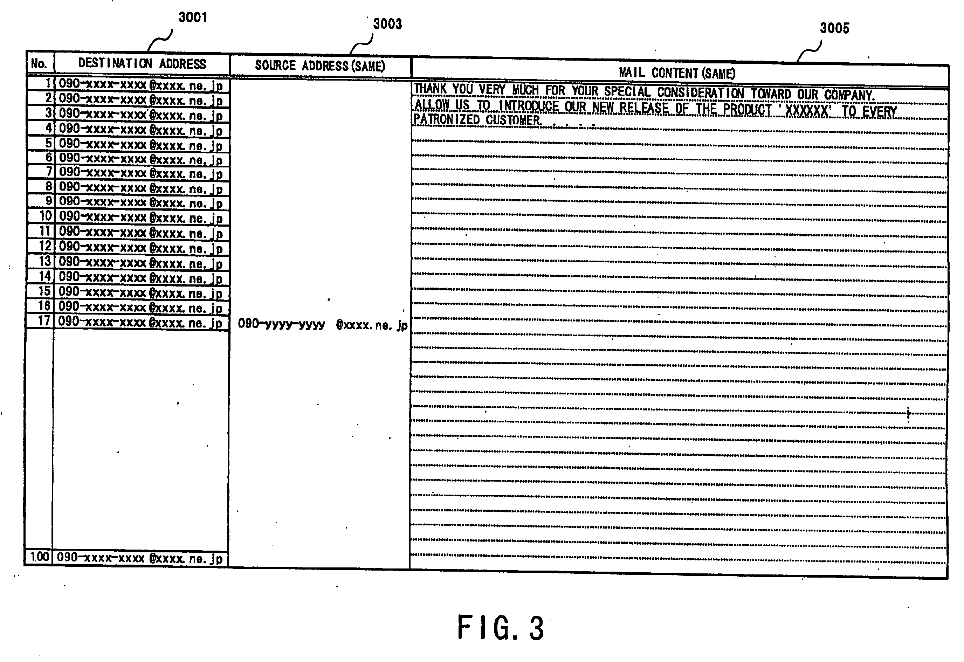

Fig. 3 shows an example of an application for sending advertising mail. In the example of Fig. 3, filling blanks 3001 of destination addresses, a filling blank 3003 of a source address and a filling blank 3005 of a mail content are included. Destination addresses of the advertising mail should be listed in the filling blanks 3001 of the destination addresses. The same source address for every destination address should be filled in the filling blank 3003 of a source address. The same mail content for every destination address should be filled in the filling blank 3005 of the mail content. The mailing request for advertising, which is sent from the advertiser terminal 15 to the mailing request receipt processor 110, also includes the same content. This mail content may also include not only text data but also image data or a combination of text and image data. Furthermore, it may be a program and/or other data.

Next, the mail sender 130 in the advertising mail agent server 1 performs mailing processing in accordance with information of the destination addresses, the source address and the mail content, which is received by the mailing request receipt processor 110 (step S3). The advertising mail sent from the mail sender 130 will be sent to the mail server 3 through the packet switch 5.

The mailing request receipt processor 110 also outputs a request to the mail processing program 313 in the mail server 3 to record the transmission status data of advertising mail bound for the user's cellular phone 9 (step S4). In this case, the following configuration will be adopted, that is, the mailing request receipt processor 110 sends information of the destination addresses to the mail processing program 313 and specifies recording objects, for example. If the receiving request is not received from the user's cellular phone 9 by a predetermined deadline, an automatic discarding processing may be performed for even the mail stored in the mailbox 311. In this case, the following configuration may be considered, that is, the mailing request receipt processor 110 sends the content of the advertising mail to the mail processing program 313, and specifies the discarded advertising mail, then the mail processing program 313 specifies those destination addresses. The packet switch 5 performs packet charge processing for the advertising mail toward the sending source, that is the advertiser (step S5). Packet charge processing by the packet switch 5 is the same as in a background art, so details would be omitted to describe here.

When the mail processing program 313 in the mail server 3 receives the advertising mail, the mail processing program 313 stores the advertising mail in the mailbox 311 of the destination address. The mail processing program 313 may also perform a processing to automatically discard the mail from the mailbox 311, if the receiving request is not received from the user's cellular phone 9 by a predetermined deadline, as written above.

If the mail is requested from the user's cellular phone 9 of the destination user of the advertising mail, the mail processing program 313 reads out the mail information including the advertising mail from the mailbox 311, and sends the mail to the user's cellular phone 9 (step S7). At that time, the mail processing program 313 records that the receiving process of the advertising mail has been conducted by the user's cellular phone 9 of the destination user, that is to say, the transmission status data of advertising mail (step S9). The packet switch 5 performs a processing to charge the destination user for the received packet of the mail including the advertising mail (step S11).

If the automatic discarding of the advertising mail is watched instead of or in addition to the step S9, the destination addresses of the discarded advertising mail should be specified and be recorded as the transmission status data of advertising mail when the automatic discarding is performed.

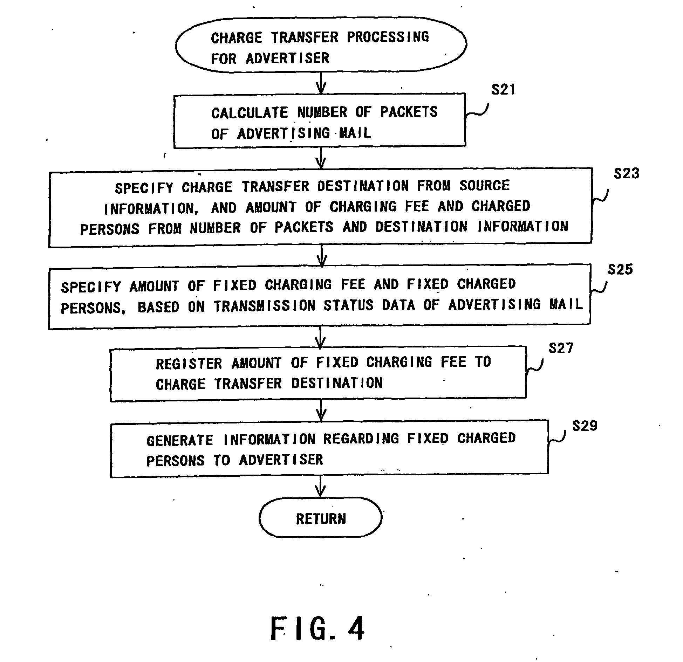

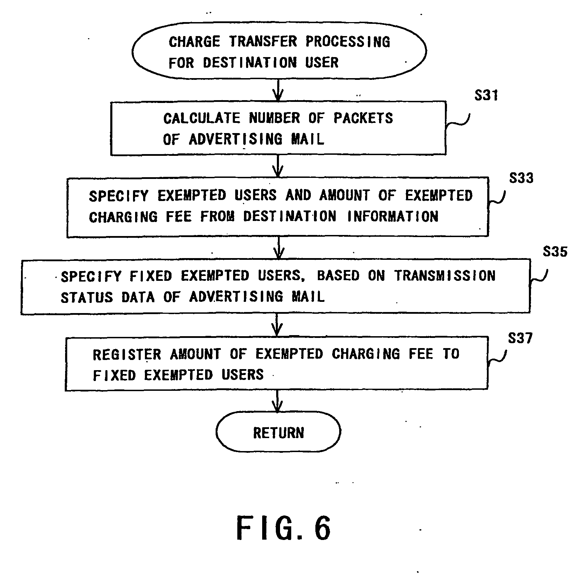

The charge transfer processor 150 performs charge transfer processing by using information of the mailing request of advertising and the transmission status data of advertising mail every predetermined period like once a month or something (step S13). The processing of this step will be explained using Fig. 4 and Fig. 6 in detail. The bill generator 170 performs an issue processing of detailed statements based on the results of this charge transfer processing and the normal calculation of the due (step S15).

With such a processing, charging is performed toward the sender of the advertising mail, who is the advertiser, when the advertising mail is sent, and charging is also performed toward the destination users when the advertising mail is received, without changing any process of the packet switch 5. Then, all the communication fees of the advertising mail will be transferred to the advertiser, by transferring the charge afterwards by the charge transfer processing which will be described below.

The charge transfer processing for the advertiser will be explained with reference to Fig. 4. First the number of packets of the advertising mail is calculated (step S21). Next, a transfer destination is specified from the source information, and an amount of a charging fee and charged person are specified from the number of packets and destination information (S23).

Next, an amount of fixed charging fee and a fixed charged person are specified based on the transmission status data of advertising mail (step S25). If the transmission status data of advertising mail is the data recording the destination users whose users' cellular phones 9 have conducted the receiving processing of the advertising mail, the fixed charged person is the destination user in the transmission status data. And the amount of fixed charging fee is calculated by a multiplication of the number of the fixed charged persons, the number of the packet and the packet unit price. On the other hand, if the transmission status data of advertising mail is the data recording the destination users whose advertising mail was automatically discarded from the mailbox 311 because the receiving processing of the advertising mail is not performed, the fixed charged persons are specified by the processing of excluding from the list of the original destination users, the destination users included in the transmission status data of advertising mail, and the destination users where the advertising mail couldn't reach when it was sent by the mail sender 130. Then, the amount of fixed charging fee is calculated by a multiplication of the number of the fixed charged persons, the number of the packet and the packet unit price.

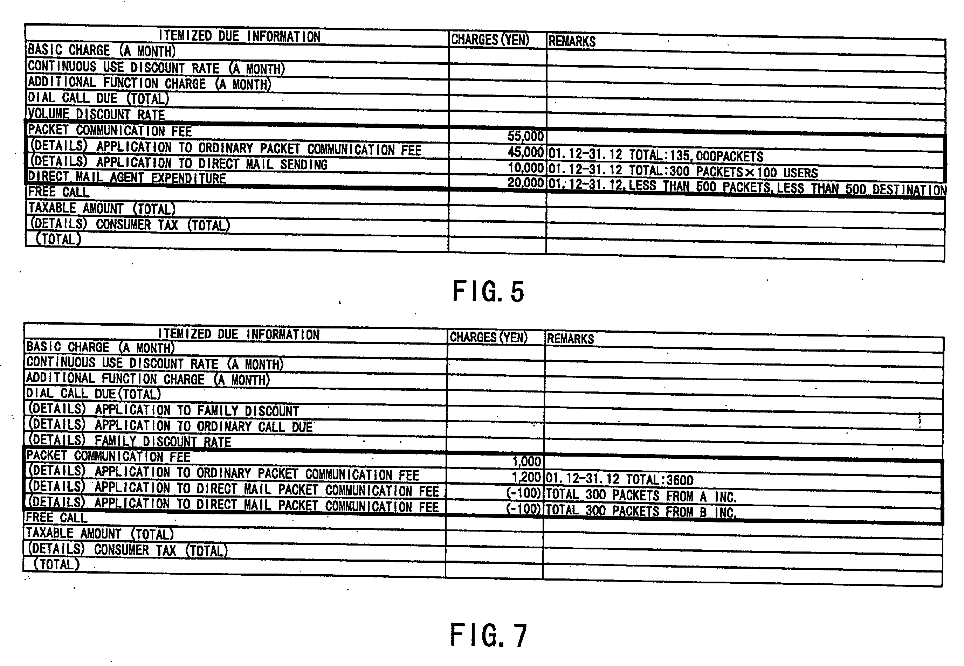

The amount of fixed charging fee specified above is registered in the charge information DB 7 as charging information for the charge transfer destination, which is the advertiser (step S27). With this information, a processing to issue detailed statements is conducted at the step S15 in Fig. 2. Fig. 5 shows an example of detailed statements for communication fee to the advertiser. Items of basic charge, continuous use discount rate, additional function charge, dial call due, volume discount rate, free call, taxable amount, etc. are described as common information of bills. Characteristic items in this embodiment are items of an application to ordinary packet communication fee and an application to direct mail sending of details of packet communication fee and an item of a direct mail agent expenditure. The item of the application to ordinary packet communication fee shows charging contents about packet communication for the advertising mailing, which is direct mail, and other packet communication. This example shows charging contents, which mean 135000 packets, if a sending charge of 300 packets costs 100 yen, and if advertising mail of 300 packets is sent to 450 destinations from December first to December thirty-first. As described in the remarks in this example, the item of the application to direct mail sending shows a fee for the number of packets for the advertising mail multiplied by the number of destination users who are confirmed to have received it. The number of packets for the advertising mail is 300 and the number of destination users who are confirmed to have received it is 100 from December first to December thirty-first. The fee corresponds to the transferred amount of the packet expenditure, which occurred when destination users of the direct mail have received the direct mail. As described in the remarks, the service charge in the case of less than 500 packets and less than 500 destinations is added as the direct mail agent expenditure. This detailed statement is one of examples, therefore no direct mail agent expenditure may be charged.

Furthermore, to exploit on subsequent marketing activities or something, an information list including such as the fixed charged persons may be made and provided to the sending source, which is the advertiser (step S29).

With this processing, the advertisers do not have to charge the destination users communication fee. Therefore, the advertisers can send users the latest advertisements freely, without making a destination users' complaint. Users are able to get useful commodity or service information for free of charge. In addition, carriers are able to expect an increase of the communication fee because of a diffusion of the advertising mail.

The charge transfer processing for the destination user will be explained using Fig. 6. First, the number of the packet of the advertising mail is calculated from the advertising contents such as text data, image data or other data in the mailing request for advertising (step S31). However, this step can be omitted by using a processing result of step S21 in Fig. 4. Next, exempted users are specified from destination information in the mailing request for advertising, and an exempted charging fee, which is calculated by a multiplication of the number of the packets and the packet unit price, is specified from the number of the packets (step S33).

Next, fixed exempted users are specified based on the transmission status data of advertising mail from the mail processing program 313 (step S35). If the transmission status data of advertising mail is the data recording destination users whose user's cellular phone 9 has conducted the receiving processing of the advertising mail, the fixed exempted user is the destination user in the transmission status data. On the other hand, if the transmission status data of advertising mail is the data recording the destination users whose advertising mail was automatically discarded from the mailbox 311 because the receiving processing of the advertising mail is not performed, the fixed exempted users are specified by the processing of excluding from the list of the original destination users, the destination users in the transmission status data of advertising mail, and the destination users where the advertising mail could not reach when it was sent by the mail sender 130.

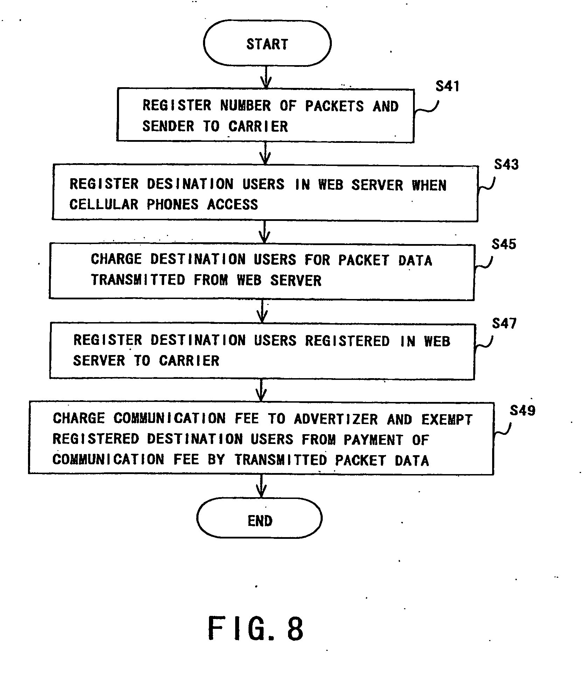

In an example of Fig. 7, as common information of bills, following items are included, such as basic charge, continuous use discount rate, family discount, additional function charge, dial call due, which includes application to family discounts, application to ordinary call due and family discount, packet communication fee, which includes application to ordinary packet communication fee, free call, taxable amount, etc. A characteristic item in this embodiment is an item of application to direct mail packet communication fee in details of the packet communication fee. As described in the remarks in this example, the item of application to direct mail packet communication fee is the item to show a charge of 300 packets transferred to the company A and a charge of 300 packets transferred to the company B. In this example, the communication fee of 300 packets costs 100 yen. 200 yen should be cost in total to receive the advertising mail out of 1200 yen for the item of application to ordinary packet communication fee, and that 200 yen will be transferred to the advertisers. As a result, 1000 yen of the packet communication fee will be charged to the user.

With this processing, the destination users will be relieved to receive the advertising mail. One embodiment of the present invention is described above, however, the present invention is not limited to this embodiment. For example, e-mail is an object of processing in the above description. The present invention, however, will be also adapted to programs or something instead of e-mail. In addition, packet data sent from web server 13 in Fig. 1, for example, may be also adapted. For example, following configuration will be adopted; the web server 13 or the advertiser, for example, registers the number of sending packets and source information to the carrier, such as the mailing request receipt processor 110 in advance (step S41 in Fig. 8), and a destination user registration unit 1313 in the web server 13 registers information regarding the user's cellular phone 9 or the destination user himself, for example, when accessing from the user's cellular phone 9 to the web server 13 (step S43). Packet data sent from the web server 13 is once charged to the destination user at the packet switch 5 as same as ordinary cases (step S45). Then, the destination user registration unit 1313 or the advertiser himself resisters a list of the destination users, which accessed during a predetermined period, to the carrier, such as the mailing request receipt processor 130 (step S47). The carrier, such as the charge transfer processor 150, charges an additional fee, which is the packet communication fee multiplied by the number of the destination users, the number of the sending packet and the packet unit price to the advertiser. And the carrier, such as the charge transfer processor 150, exempts the registered destination users from the payment of the packet communication fee for the number of transmitted packets (step S49).

The user's cellular phone 9 may be not only a cellular phone but also a portable terminal. Functions described above of the advertising mail agent server 1 may be implemented by one or plurality of computers. The same will be mentioned in the mail server 3. It is also possible to prepare another DB to store the charge information in addition to the charge information DB 7, and to use it for processing to generates detailed statements.

Furthermore, as the mailing request for advertising shown in Fig. 3 is an example, a list of destination addresses of e-mail, a source address and mail contents, which is not limited by letters, may be registered separately. As described above, to register the source information and the sending contents at first, and to register the destination information later may be adapted.

The detailed statements in Fig. 5 and Fig. 7 are also examples. Any items except the packet communication fee and the direct mail agent expenditure may be changed in accordance with charge systems of carriers.

Information of the fixed charged persons is generated for the advertiser at step S29 in Fig. 4. However, for example, information as to when the fixed charged persons received the advertising mail, to which advertising mail were discarded as well as the fixed charged persons, and information regarding the destination users to whom the mail sender 130 failed to send the advertising mail may be also included.

The system described above can be also implemented by installing a particular program into a computer. In this case, this program may be stored on a storage medium or a memory device such as a floppy disk, a CD-ROM, a magneto-optical disk, a semiconductor memory or a hard disk. The program may be distributed via network 11. Further, the intermediate processing results will be temporary stored in memory.

As described above, an embodiment of the present invention can provide technology in circumstances in which the packet charging is performed, to properly charge the receiving fee for a particular packet data to a sender of the particular packet data.

## Claims

1. A method for charging a communication fee, comprising the steps of:
registering, into a transmitting information storage device (120), information including first identification information of destination users, sender identification information, and information regarding particular packet data to be sent; and
when a terminal (9) of said destination user registered in said transmitting information storage device (120) performs a processing to receive packet data, charging said destination user for said packet data;
wherein said charging step is carried out without distinguishing between said packet data that includes said particular packet data and said packet data that does not include said particular packet data; and
transferring a communication fee, caused by said particular packet data included in said packet data during a predetermined period and charged to said destination users, to said sender whose identification information is registered in said transmitting information storage device (120), by using receiving status data for said particular packet data to be received by said terminals (9) of said destination users registered in said transmitting information storage device (120);
wherein said receiving status data specifies destination users who received said particular packet data and are identified by said first identification information, **characterised in that** said charging is based on second identification information of said terminal (9) of said destination user, and said first identification information is different from said second identification information, and a number of packets of said particular packet data is calculated from said information regarding said particular packet data stored in said transmitting information storage device (120), and an amount of the communication fee to be transferred is calculated by using a number of destination users specified by said receiving status data, and said number of packets of said particular packet data.

2. The method set forth in claim 1, further comprising a step of:
charging said sender for said particular packet data when said particular packet data is transmitted to a mailbox (311) of the destination users registered in said transmitting information storage device (120).

3. The method set forth in claim 1, wherein said registering step comprises the steps of:
registering information including said sender identification information and information regarding said particular packet data to be sent into said transmitting information storage device (120); and
registering first identification information of said destination users into said transmitting information storage device (120).

4. The method set forth in claim 3, wherein particular packet data includes web server packet data, and said step of registering information regarding said destination users includes a step of registering information regarding said destination user that is acquired when a terminal (9) of said destination user requests said particular packet data.

5. The method set forth in claim 1, wherein said transferring step comprises the steps of
performing a processing to exempt particular destination users whose terminals (9) are confirmed to have performed said processing to receive said particular packet data among said destination users registered in said transmitting information storage device (120) from the charge for said particular packet data; and
performing a processing to charge said sender registered in said transmitting information storage device (120) for a fee of said particular packet data for said particular destination users whose terminals (9) are confirmed to have performed said processing to receive said particular packet data among said destination users registered in said transmitting information storage device (120).

6. The method set forth in claim 3, wherein said transferring step further comprises the steps of:
acquiring first identification information of destination users to which said particular packet data was discarded;
acquiring first identification information of destination users who could not receive said particular packet data ; and
specifying destination users who are confirmed to have performed said processing to receive said particular packet data by excluding the acquired first identification information of said destination users from said first identification information of said destination users, which was registered in said transmitting information storage device (120).

7. The method set forth in claim 1, further comprising a step of
outputting information regarding destination users to which said particular packet data was discarded and destination users of said particular packet data that could not be reached when said particular packet data was transmitted.

8. A system for charging a communication fee, comprising:
means (110) for registering into a transmitting information storage device (120) information including first identification information of destination users, sender identification information, and information regarding particular packet data to be sent; and
means (5) for charging said destination user for said packet data when a terminal (9) of said destination user registered in said transmitting information storage device (120) performs a processing to receive packet data;
wherein charging is carried out without distinguishing between said packet data that includes said particular packet data and said packet data that does not include said particular packet data; and
means (150) for transferring a communication fee, caused by said particular packet data included in said packet data during a predetermined period and charged to said destination users for said particular packet data, to said sender whose identification information is registered in said transmitting information storage device (120), by using receiving status data for said particular packet data to be received by said terminals (9) of said destination users registered in said transmitting information storage device (120);
wherein said receiving status data specifies destination users who received said particular packet data and are identified by said first identification information, **characterised in that** said charging means (5) are operable to charge said destination user for said packet data based on second identification information of said terminal (9) of said destination user, and said first identification information is different from said second identification information and said charging means are operable to calculate a number of packets of said particular packet data from said information regarding said particular packet data stored in said transmitting information storage device (120) and to calculate an amount of communication fee to be transferred by using a number of destination users specified by said receiving status data, and said number of packets of said particular packet data.

9. The system set forth in claim 8, further comprising:
means for charging said sender for said particular packet data when said particular packet data is transmitted to a mailbox (311) of the destination users registered in said transmitting information storage device (120).

10. The system set forth in claim 8, wherein said means (110) for registering comprises:
first means for registering information regarding said sender identification information and information regarding said particular packet data to be sent into said transmitting information storage device (120); and
second means for registering first identification information of said destination users into said transmitting information storage device (120).

11. The system set forth in claim 10, wherein particular packet data includes web server packet data, and said second means for registering includes means for registering information regarding said destination user that is acquired when a terminal (9) of said destination user requests said particular packet data.

12. The system set forth in claim 8, wherein said means for transferring (150) comprises:
means for performing a processing to exempt particular destination users whose terminals (9) are confirmed to have performed said processing to receive said particular packet data among said destination users registered in said transmitting information storage device (120) from the charge for said particular packet data; and
means for performing a processing to charge said sender registered in said transmitting information storage device (120) for a fee of said particular packet data for said particular destination users whose terminals (9) are confirmed to have performed said processing to receive said particular packet data among said destination users registered in said transmitting information storage device (120).

13. The system set forth in claim 10, wherein said means for transferring (150) further comprises:
means for acquiring first identification information of destination users to which said particular packet data was discarded ;
means for acquiring first identification information of destination users who could not receive said particular packet data; and
means for specifying destination users who are confirmed to have performed said processing to receive said particular packet based on said data regarding said packet by excluding the acquired first identification information of said destination users from said first identification information of said destination users, which are registered in said transmitting information storage device (120).

14. A computer program which, when run on a computer, causes the computer to carry out a method as claimed in any one of claims 1 to 7.

## Patentansprüche

1. Verfahren zum Erheben einer Kommunikationsgebühr mit den Schritten :
Eintragen von Informationen, die erste Identifikationsinformationen zu Zieltcilnehmern, Absenderidentifikationsinformationen und besondere, zu sendende Paketdaten betreffende Informationen umfassen, in eine Übertragungsinformationsspeichervorrichtung (120) und
Belasten des Zielteilnehmers für die Paketdaten, wenn ein Anschluss (9) des Zielteilnehmers, der in die Übertragungsinformationaspeichervorrichtung (120) eingetragen ist, eine Verarbeitung zum Empfangen von Paketdaten ausführt,
wobei der Belastungsschritt ohne eine Unterscheidung zwischen den Paketdaten, die die besonderen Paketdaten enthalten, und den Paketdaten ausgeführt wird, die die besonderen Paketdaten nicht enthalten, und
Transferieren einer Kommunikationsgebühr, die von den besonderen Paketdaten verursacht wird, die in den Paketdaten enthalten sind, und die den Zielteilnehmern in Rechnung gestellt wird, während einer vorgegebenen Periode an den Absender, dessen Identifikationsinformationen in die Übertragungsinformationsspeichervorrichtung (120) eingetragen sind, unter Verwendung von Empfangsstatusdaten für die besonderen Paketdaten, die von den Anschlüssen (9) der Zielteilnehmer empfangen werden sollen, die in die Übertragungsinformationsspeichervorrichtung (120) eingetragen sind,
wobei die Empfangsstatusdaten Zielteilnehmer spezifizieren, die die bestimmten Paketdaten empfangen haben und durch die ersten Identifikationsinformationen identifiziert werden,
**dadurch gekennzeichnet, dass** die Belastung auf zweiten Identifikationsinformationen des Anschlusses (9) des Zielteilnehmers basiert und die ersten Identifikationsinformationen sich von den zweiten Identifikationsinformationen unterscheiden, eine Anzahl an Paketen der besonderen Paketdaten anhand der in der Ubertragungsinformationsspeichervorrichtung (120) gespeicherten, die besonderen Paketdaten betreffenden Informationen berechnet wird und die Höhe der zu transferierenden Kommunikationsgebühr unter Verwendung einer Anzahl an Zielteilnehmern, die von den Empfangsstatusdaten spezifiziert wird, und der Anzahl an Paketen der besonderen Paketdaten berechnet wird.

2. Verfahren nach Anspruch 1, das ferner den Schritt
der Belastung des Absenders für die besonderen Paketdaten umfasst, wenn die besonderen Paketdaten an eine Mailbox (311) der Zielteilnehmer gesendet werden, die in die Übertragungsinformationsspeichervorrichtung (120) eingetragen sind.

3. Verfahren nach Anspruch 1, bei dem der Eintragungsschritt die Schritte umfasst:
Eintragen von Informationen, die die Absenderidentifikationsinformationen und die die besonderen, zu sendenden Paketdaten betreffenden Informationen umfassen, in die Übertragungsinformationsspeichervorrichtung (120) und
Eintragen der ersten Identifikationsinformationen der Zielteilnehmer in die Übertragungsinformationsspeichervorrichtung (120).

4. Verfahren nach Anspruch 3, bei dem besondere Paketdaten Webserver-Paketdaten umfassen und der Schritt der Eintragung von die Zielteilnehmer betreffenden Informationen einen Schritt der Eintragung von den Zielteilnehmer betreffenden Informationen umfasst, die erhalten werden, wenn ein Anschluss (9) des Zielteilnehmers die besonderen Paketdaten anfordert.

5. Verfahren nach Anspruch 1, bei dem der Transferierungsschritt die Schritte umfasst:
Ausführen einer Verarbeitung zur Befreiung bestimmter Zielteilnehmer, deren Anschlüsse (9) bestätigter Weise die Verarbeitung zum Empfangen der besonderen Paketdaten ausgeführt haben, unter den Zielteilnehmern, die in die Übertragungsinformationsspeichervorrichtung (120) eingetragen sind, von der Gebühr für die besonderen Paketdaten und
Ausführen einer Verarbeitung zur Belastung des Absenders, der in die Übertragungsinformationsspeichervorrichtung (120) eingetragen ist, mit einer Gebühr für die besonderen Paketdaten für die besonderen Zielteilnehmer, deren Anschlüsse (9) bestätigter Weise die Verarbeitung zum Empfangen der besonderen Paketdaten ausgeführt haben, unter den Zielteilnehmern, die in die Übertragungsinformationsspeichervorrichtung (120) eingetragen sind.

6. Verfahren nach Anspruch 3, bei der der Überweisungsschritt ferner die Schritte umfasst:
Erlangen erster Identifikationsinformationen zu Zielteilnehmern, an die die besonderen Paketdaten ausgegeben wurden;
Erlangen erster Identifikationsinformationen zu Zielteilnehmern, die die besonderen Paketdaten nicht empfangen konnten;
Spezifizieren von Zielteilnehmern, die bestätigter Weise die Verarbeitung zum Empfangen der besonderen Paketdaten ausgeführt haben, durch Ausschließen der erhaltenen ersten Identifikationsinformationen zu den Zielteilnehmern unter den ersten Identifikationsinformationen zu den Zielteilnehmern, die in die Übertragungsinformationsspeichervorrichtung (120) eingetragen wurden.

7. Verfahren nach Anspruch 1, das ferner einen Schritt
der Ausgabe von Informationen umfasst, die Zielteilnehmer, an die die besonderen Paketdaten ausgegeben wurden, und Zielteilnehmer für die besonderen Paketdaten betreffen, die nicht erreicht werden konnten, als die besonderen Paketdaten gesendet wurden.

8. System zum Erheben einer Kommunikationsgebühr mit:
Mitteln (110) zum Eintragen von Informationen, die erste Identifikationsinformationen zu Zielteilnehmern, Absenderidentifikationsinformationen und besondere, zu sendende Paketdaten betreffende Informationen umfassen, in eine Übertragungsinformationsspeichervorrichtung (120) und
Mitteln (5) zum Belasten des Zielteilnehmers für die Paketdaten, wenn ein Anschluss (9) des Zielteilnehmers, der in die Übertragungsinformationsspeichervorrichtung (120) eingetragen ist, eine Verarbeitung zum Empfangen von Paketdaten ausführt;
wobei die Belastung ohne eine Unterscheidung zwischen den Paketdaten, die die besonderen Paketdaten enthalten, und den Paketdaten ausgeführt wird, die die besonderen Paketdaten nicht enthalten; und
Mitteln (150) zum Überweisen einer Kommunikationsgebühr, die von den besonderen Paketdaten verursacht wird, die in den Paketdaten enthalten sind, und mit der die Zielteilnehmer für die besonderen Paketdaten belastet werden, während einer vorgegebenen Periode an den Absender, dessen Identifikationsinformationen in die Übertragungsinformationsspeichervorrichtung (120) eingetragen sind, unter Verwendung von Empfangsstatusdaten für die besonderen Paketdaten, die von den Anschlüssen (9) der Zielteilnehmer empfangen werden sollen, die in die Übertragungsinformationsspeichervorrichtung (120) eingetragen sind;
wobei die Empfangsstatusdaten Zielteilnehmer spezifizieren, die die besonderen Paketdaten empfangen haben und durch die ersten Identifikationsinformationen identifiziert werden,
**dadurch gekennzeichnet, dass** die Belastungsmittel (5) so betreibbar sind, dass sie den Zielteilnehmer auf der Grundlage von zweiten Identifikationsinformationen zum Anschluss (9) des Zielteilnehmers für die Paketdaten belasten, und die ersten Identifikationsinformationen sich von den zweiten Identifikationsinformationen unterscheiden, und dass die Belastungsmittel so betreibbar sind, dass sie eine Anzahl an Paketen der besonderen Paketdaten anhand der die besonderen Paketdaten betreffenden Informationen berechnen, die in der Übertragungsinformationsspeichervorrichtung (120) gespeichert sind, und eine Höhe einer Kommunikationsgebühr, die transferiert werden soll, unter Verwendung einer Anzahl an Zielteilnehmern, die von den Empfangsstatusdaten spezifiziert: wird, und der Anzahl an Paketen der besonderen Paketdaten berechnen.

9. System nach Anspruch 8, das ferner umfasst:
Mittel zum Belasten des Absenders für die besonderen Paketdaten, wenn die besonderen Paketdaten an eine Mailbox (311) der Zielteilnehmer gesendet werden, die in die Übertragungsinformationsspeichervorrichtung (120) eingetragen sind.

10. System nach Anspruch 8, bei dem die Mittel (110) zum Eintragen umfassen:
erste Mittel zum Eintragen von die Absenderidentifikationsinformationen betreffenden Informationen und die besonderen, zu sendenden Paketdaten betreffenden Informationen in die übertragungsinformationsspeichervorrichtung (120) und
zweite Mittel zum Eintragen von ersten Identifikationsinformationen zu den Zielteilnehmern in die Übertragungsinformationsspeichervorrichtung (120).

11. System nach Anspruch 10, bei dem besondere Paketdaten Webserver-Paketdaten umfassen und die zweiten Mittel zum Eintragen Mittel zum Eintragen von den Zielteilnehmer betreffenden Informationen umfassen, die erhalten werden, wenn ein Anschluss (9) des Zielteilnehmers die besonderen Paketdaten anfordert.

12. System nach Anspruch 8, bei dem die Mittel (150) zum Transferieren umfassen:
Mittel zum Ausführen einer Verarbeitung zur Befreiung besonderer Zielteilnehmer, deren Anschlüsse (9) bestätigter Weise die Verarbeitung zum Empfangen der besonderen Paketdaten ausgeführt haben, unter den Zielteilnehmern, die in die Ubertragungsinformationsspeichervorrichtung (120) eingetragen sind, von der Gebühr für die bestimmten Paketdaten und
Mittel Ausführen einer Verarbeitung zur Belastung des Absenders, der in die Übertragungsinformationsspeichervorrichtung (120) eingetragen ist, mit einer Gebühr für die besonderen Paketdaten für die besonderen Zielteilnehmer, deren Anschlüsse (9) bestätigter Weise die Verarbeitung zum Empfangen der besonderen Paketdaten ausgeführt haben, unter den Zielteilnehmern, die in die Übertragungsinformationsspeichervorrichtung (120) eingetragen sind.

13. System nach Anspruch 10, bei dem die Mittel (150) zum Transferieren ferner umfassen:
Mittel zum Erlangen erster Identifikationsinformationen zu Zielteilnehmern, an die die besonderen Paketdaten ausgegeben wurden;
Mittel zum Erlangen von ersten Identifikationsinformationen zu Zielteilnehmern, die die besonderen Paketdaten nicht empfangen konnten; und
Mittel zum Spezifizieren von Zielteilnehmern, die bestätigter Weise, die Verarbeitung zum Empfangen der besonderen Paketdaten ausgeführt haben, auf der Grundlage der die Paketdaten betreffenden Daten durch Ausschließen der erhaltenen ersten Identifikationsinformationen zu den Zielteilnchmern unter den ersten Identifikationsinformationen zu den Zielteilnehmern, die in die Übertragungsinformationsspeichervorrichtung (120) eingetragen sind.

14. Computerprogramm, das, wenn es auf einem Computer ausgeführt wird, den Computer zum Ausführen eines Verfahrens gemäß einem der Ansprüche 1 bis 7 veranlasst.

## Revendications

1. Procédé de taxation d'une redevance de communication, comprenant les étapes consistant à :
enregistrer, dans un dispositif de mémorisation d'informations de transmission (120), des informations comprenant des premières informations d'identification d'utilisateurs de destination, des informations d'identification d'expéditeur et des informations concernant des données de paquets particulières devant être envoyées, et
lorsqu'un terminal (9) dudit utilisateur de destination enregistré dans ledit dispositif de mémorisation d'informations de transmission (120) réalise un traitement pour recevoir les données de paquets, taxer ledit utilisateur de destination pour lesdites données de paquets,
où ladite étape de taxation est exécutée sans effectuer de distinction entre lesdites données de paquets qui comprennent lesdites données de paquets particulières et lesdites données de paquets qui ne comprennent pas lesdites données de paquets particulières, et
transférer une redevance de communication, provoquée par lesdites données de paquets particulières incluses dans lesdites données de paquets au cours d'un intervalle prédéterminé et facturée auxdits utilisateurs de destination, audit expéditeur dont les informations d'identification sont enregistrées dans ledit dispositif de mémorisation d'informations de transmission (120), en utilisant des données d'état de réception pour lesdites données de paquets particulières devant être reçues par lesdits terminaux (9) desdits utilisateurs de destination enregistrés dans ledit dispositif de mémorisation d'informations de transmission (120),
où lesdites données d'état de réception spécifient les utilisateurs de destination qui ont reçu lesdites données de paquets particulières et sont identifiés par lesdites premières informations d'identification, **caractérisé en ce que** ladite taxation est fondée sur des deuxièmes informations d'identification dudit terminal (9) dudit utilisateur de destination et lesdites premières informations d'identification sont différentes desdites deuxièmes informations d'identification, et un nombre de paquets desdites données de paquets particulières est calculé à partir desdites informations concernant lesdites données de paquets particulières mémorisées dans ledit dispositif de mémorisation d'informations de transmission (120) et un montant de la redevance de communication devant être transféré est calculé en utilisant un nombre d'utilisateurs de destination spécifié par lesdites données d'état de réception et ledit nombre de paquets desdites données de paquets particulières.

2. Procédé selon la revendication 1, comprenant en outre une étape consistant à :
taxer ledit expéditeur pour lesdites données de paquets particulières lorsque lesdites données de paquets particulières sont transmises à une boîte aux lettres (311) des utilisateurs de destination enregistrés dans ledit dispositif de mémorisation d'informations de transmission (120).

3. Procédé selon la revendication 1, dans lequel ladite étape d'enregistrement comprend les étapes consistant à :
enregistrer des informations comprenant lesdites informations d'identification d'expéditeur et des informations concernant lesdites données de paquets particulières devant être envoyées dans ledit dispositif de mémorisation d'informations de transmission (120), et
enregistrer les premières informations d'identification desdits utilisateurs de destination dans ledit dispositif de mémorisation d'informations de transmission (120).

4. Procédé selon la revendication 3, dans lequel les données de paquets particulières comprennent des données de paquets de serveur Web et ladite étape d'enregistrement d'informations concernant lesdits utilisateurs de destination comprend une étape consistant à enregistrer les informations concernant ledit utilisateur de destination qui sont acquises lorsqu'un terminal (9) dudit utilisateur de destination demande lesdites données de paquets particulières.

5. Procédé selon la revendication 1, dans lequel ladite étape de transfert comprend les étapes consistant à :
exécuter un traitement pour exempter des utilisateurs de destination particuliers, dont les terminaux (9) sont confirmés avoir exécuté ledit traitement pour recevoir lesdites données de paquets particulières, parmi lesdits utilisateurs de destination enregistrés dans ledit dispositif de mémorisation d'informations de transmission (120), de la taxe pour lesdites données de paquets particulières, et
réaliser un traitement pour taxer ledit expéditeur enregistré dans ledit dispositif de mémorisation d'informations de transmission (120) pour une redevance pour lesdites données de paquets particulières pour lesdites utilisateurs de destination particuliers, dont les terminaux (9) sont confirmés avoir exécuté ledit traitement pour recevoir lesdites données de paquets particulières, parmi lesdits utilisateurs de destination enregistrés dans ledit dispositif de mémorisation d'informations de transmission (120).

6. Procédé selon la revendication 3, dans lequel ladite étape de transfert comprend en outre les étapes consistant à :
acquérir des premières informations d'identification des utilisateurs de destination pour lesquels lesdites données de paquets particulières ont été rejetées,
acquérir des premières informations d'identification des utilisateurs de destination qui n'ont pas pu recevoir lesdites données de paquets particulières, et
spécifier les utilisateurs de destination qui sont confirmés avoir exécuté ledit traitement pour recevoir lesdites données de paquets particulières en excluant les premières informations d'identification acquises desdits utilisateurs de destination desdites premières informations d'identification desdits utilisateurs de destination, qui sont enregistrées dans ledit dispositif de mémorisation d'informations de transmission (120).

7. Procédé selon la revendication 1, comprenant en outre une étape consistant à :
fournir en sortie des informations concernant les utilisateurs de destination pour lesquels lesdites données de paquets particulières ont été rejetées et les utilisateurs de destination desdites données de paquets particulières qui n'ont pas pu être atteints lorsque lesdites données de paquets particulières ont été transmises.

8. Système de taxation d'une redevance de communication comprenant :
un moyen (110) destiné à enregistrer dans un dispositif de mémorisation d'informations de transmission (120) des informations comprenant des premières informations d'identification des utilisateurs de destination, des informations d'identification d'expéditeur et des informations concernant des données de paquets particulières devant être envoyées, et
un moyen (5) destiné à taxer ledit utilisateur de destination pour lesdites données de paquets lorsqu'un terminal (9) dudit utilisateur de destination enregistré dans ledit dispositif de mémorisation d'informations de transmission (120) exécute un traitement pour recevoir les données de paquets,
dans lequel la taxation est effectuée sans réaliser de distinction entre lesdites données de paquets qui comprennent lesdites données de paquets particulières et lesdites données de paquets qui ne comprennent pas lesdites données de paquets particulières, et
un moyen (150) destiné à transférer une redevance de communication, provoquée par lesdites données de paquets particulières incluses dans lesdites données de paquets au cours d'une période prédéterminée et imputée auxdits utilisateurs de destination pour lesdites données de paquets particulières, audit expéditeur dont les informations d'identification sont enregistrées dans ledit dispositif de mémorisation d'informations de transmission (120), en utilisant des données d'état de réception pour lesdites données de paquets particulières devant être reçues par lesdits terminaux (9) desdits utilisateurs de destination enregistrés dans ledit dispositif de mémorisation d'informations de transmission (120),
dans lequel lesdites données d'état de réception spécifient les utilisateurs de destination qui ont reçu lesdites données de paquets particulières et sont identifiés par lesdites premières informations d'identification, **caractérisé en ce que** ledit moyen de taxation (5) peut être mis en oeuvre pour taxer ledit utilisateur de destination pour lesdites données de paquets sur la base de deuxièmes informations d'identification dudit terminal (9) dudit utilisateur de destination et lesdites premières informations d'identification sont différentes desdites deuxièmes informations d'identification et ledit moyen de taxation peut être mis en oeuvre pour calculer un nombre de paquets desdites données de paquets particulières à partir des informations concernant lesdites données de paquets particulières mémorisées dans ledit dispositif de mémorisation d'informations de transmission (120) et pour calculer un montant de redevance de communication devant être transféré en utilisant un nombre d'utilisateurs de destination spécifié par lesdites données d'état de réception et ledit nombre de paquets desdites données de paquets particulières.

9. Système selon la revendication 8, comprenant en outre :
un moyen de taxation dudit expéditeur pour lesdites données de paquets particulières lorsque lesdites données de paquets particulières sont transmises à une boîte aux lettres (311) des utilisateurs de destination enregistrés dans ledit dispositif de mémorisation d'informations de transmission (120).

10. Système selon la revendication 8, dans lequel ledit moyen (110) destiné à enregistrer comprend :
un premier moyen destiné à enregistrer des informations concernant lesdites informations d'identification d'expéditeur et les informations concernant lesdites données de paquets particulières devant être envoyées dans ledit dispositif de mémorisation d'informations de transmission (120), et
un deuxième moyen destiné à enregistrer les premières informations d'identification desdits utilisateurs de destination dans ledit dispositif de mémorisation d'informations de transmission (120).

11. Système selon la revendication 10, dans lequel les données de paquets particulières comprennent des données de paquets de serveur Web et ledit deuxième moyen destiné à enregistrer comprend un moyen destiné à enregistrer des informations concernant ledit utilisateur de destination qui sont acquises lorsqu'un terminal (9) dudit utilisateur de destination demande lesdites données de paquets particulières.

12. Système selon la revendication 8, dans lequel ledit moyen destiné à transférer (150) comprend :
un moyen destiné à exécuter un traitement pour exempter des utilisateurs de destination particuliers, dont les terminaux (9) sont confirmés avoir exécuté ledit traitement pour recevoir lesdites données de paquets particulières, parmi lesdits utilisateurs de destination enregistrés dans ledit dispositif de mémorisation d'informations de transmission (120), de la taxe pour lesdites données de paquets particulières, et
un moyen destiné à exécuter un traitement pour taxer ledit expéditeur enregistré dans ledit dispositif de mémorisation d'informations de transmission (120) pour une redevance pour lesdites données de paquets particulières pour lesdits utilisateurs de destination particuliers, dont les terminaux (9) sont confirmés avoir exécuté ledit traitement pour recevoir lesdites données de paquets particulières, parmi lesdits utilisateurs de destination enregistrés dans ledit dispositif de mémorisation d'informations de transmission (120).

13. Système selon la revendication 10, dans lequel ledit moyen destiné à transférer (150) comprend en outre :
un moyen destiné à acquérir les premières informations d'identification des utilisateurs de destination pour lesquels lesdites données de paquets particulières ont été rejetées,
un moyen destiné à acquérir les premières informations d'identification des utilisateurs de destination qui n'ont pas pu recevoir lesdites données de paquets particulières, et
un moyen destiné à spécifier les utilisateurs de destination qui sont confirmés avoir exécuté ledit traitement pour recevoir ledit paquet particulier sur la base desdites données concernant ledit paquet en excluant les premières informations d'identification desdits utilisateurs de destination desdites premières informations d'identification desdits utilisateurs de destination, qui sont enregistrées dans ledit dispositif de mémorisation d'informations de transmission (120).

14. Programme informatique qui, lorsqu'il est exécuté sur un ordinateur, amène l'ordinateur à réaliser un procédé selon l'une quelconque des revendications 1 à 7.
